# EUROPEAN PATENT APPLICATION

(11) **EP 2 364 602 A1**
(43) Date of publication of application: **14.09.2011**
(21) Application number: 09830034.6
(22) Date of filing: 30.11.2009
(51) Int. Cl.: A23L 2/66, A23L 2/02, A23L 1/305

(54) **FOOD SHAKE AND METHOD FOR PREPARING SAID SHAKE**

(30) Priority: 03.12.2008 ES 200803436
(71) Applicant: Durán Castelló, Robert, 17244 Cassà de la Selva (Gerona) (ES)
(72) Inventor: Durán Castelló, Robert, 17244 Cassà de la Selva (Gerona) (ES)
(74) Representative: Gallego Jiménez, José Fernando
(86) International application number: PCT/ES2009/000553
(87) International publication number: WO 2010/063857

(57) **Abstract**

The invention relates to a food shake having a composition comprising: egg white proteins, sweetener, fruit-juice concentrate and water in the following weight percentages: 2% - 52% egg white proteins, 3% - 33% fruit-juice concentrate, 0.01 % - 1.5 % sweetener, and water to make the remainder. The method for preparing the food shake comprises the following steps: mixing the protein with the water, enriching the water with the fruit-juice concentrate and adding the sweetener; and, finally, pasteurizing the product at a temperature at least 63°C for 10 minutes.

## Description

### Object of the invention.

The present invention relates to a food shake providing substantial nutritional advantages over traditional shakes and a method for preparing said shake.

### Background of the invention.

At present it is common to consume shakes using different mixed products, such as juices, milk, sugar and other foods, to provide a refreshing drink and a food supply.

Depending on their formulation, these shakes provide varying amounts of sugars, carbohydrates, fats, proteins, amino acids and other substances making them more or less balanced, but not ideal as specific nutritional supplements.

Thus, for example, athletes in general, and bodybuilders in particular need a specific and high intake of proteins and very low carbohydrate and fat intake for building muscle during certain training periods. Therefore, they eat certain foods, such as meat, and prepared supplements which mainly provide them with proteins. However, these foods and supplements are usually configured as solids or creams, for conventional consumption as meals on a dish or the like, but they are not suitable for a convenient dosed intake during prolonged training sessions, as is the case with the consumption of a liquid beverage.

Spanish patent 8401838 describing a process for preparing a beverage consisting of a fruit juice with whey proteins to which hydrolyzed lactose is added is known. This procedure also includes the addition of polysaccharides as sweetener. The procedure also includes the pasteurization of the beverage at a temperature of 70 ° C.

Spanish Patent 2307126 describes a method for producing a beverage comprising a solution of soy protein and milk in a thickener and a fruit juice concentrate, the product being then pasteurized at temperatures between 90° C and 105° C.

Patent application US20030104108 describes a fruit or vegetable juice and soy protein beverage.

Patent application DE10325797 describes a cocktail based on milk-like products obtained from soybean, to which sweeteners such as glucose and dextrose, fruit juice concentrate and apple cider vinegar, citric acid, vitamin C and water are added.

### Description of the invention.

The food shake and its preparation method, object of this invention have technical features that provide the user with a specific food supplement based on proteins in a liquid form that is easily consumable, mainly for a dosed consumption over time.

The food shake of the invention is of the type comprising fruit juice concentrate, sweetener and water, presenting the peculiarity of further comprising egg white proteins in a weight percentage ranging from 2% to 52%, the weight percentages of the remaining components being: from 3% to 33% of fruit juice concentrate, between 0.01 % and 1.5% sweetener and water making up the remainder. In this way the food shake has a lot of proteins and little or no fat and carbohydrate contents, with the advantage of further containing vitamins and nutrients provided by the fruit juice concentrate. Since the food shake is a beverage, it provides easy handling and dosed consumption while exercising, being very suitable for consuming in gyms, while performing outdoor exercise and the like.

The method for preparing said shake comprises mixing the proteins with the water, enriching the mixture with the fruit juice concentrate and adding the sweetener, then pasteurizing the product at a temperature equal to or higher than 63 ° C for about 10 minutes.

### Preferred embodiment of the invention.

In a preferred embodiment to obtain 300 grams of shake, 20 grams of egg white proteins are used and mixed with 187.7 grams of water. To this mixture 92 grams of fruit juice concentrate and 0.3 grams of sweetener are added.

The resulting product is then pasteurized by exposing it to a temperature of 63 ° C for 10 minutes.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. Food shake of the type comprising: fruit juice concentrate, sweetener and water, **characterized in that** it comprises egg white proteins in a weight percentage between 2% and 52%, the weight percentages of the remaining components being: from 3% to 33% of fruit juice concentrate, between 0.01% and 1.5% of sweetener and water making up the remainder.

2. Method of preparing a food shake, **characterized in that** it comprises the following steps: mixing the egg white protein with the water, enriching the mixture with the fruit juice concentrate, adding the sweetener to the previous mixture, and finally pasteurizing the resulting product at a temperature equal to or higher than 63 ° C for 10 minutes.
